# EUROPEAN PATENT SPECIFICATION

(11) **EP 1 481 868 B1**
(45) Date of publication and mention of the grant of the patent: **20.08.2008**
(21) Application number: 04253040.2
(22) Date of filing: 24.05.2004
(51) Int. Cl.: B60T 17/08

(54) **Air brake actuator assembly**
Druckluftbremszylinder
Actionneur de frein à air comprimé

(30) Priority: 30.05.2003 GB 0312459
(43) Date of publication of application: 01.12.2004
(73) Proprietor: Meritor Heavy Vehicle Braking Systems (UK) Limited, Cwmbran, Gwent NP44 3XU (GB)
(72) Inventor: Royston, Leonard Morris, Newport, NP10 0DN (GB)
(74) Representative: Jones, John Bryn

(56) References cited:
- WO-A-98/26968
- DE-A- 4 135 943
- DE-B- 1 242 421

## Description

The present invention relates to an air brake actuator assembly, and in particular to an air brake actuator assembly for an air actuated disc brake for a heavy vehicle such as a truck or bus.

It is known to provide an air brake actuator assembly for a wheel of a vehicle especially a heavier vehicle such as a truck or bus, the assembly comprising a cast brake housing with an air chamber. The air chamber is typically of mild steel and comprises a front shell and a rear shell which are attached to one another to form an air tight seal. The front shell is attached to a flange of the brake housing, typically by screws, to form a weather tight seal. Such a weather tight seal is necessary to inhibit the ingress of water or other foreign matter such as brake dust or dirt. The air chamber contains a piston connected to a brake actuator by a suitable linkage.

Pressurised air is introduced behind a diaphragm of the piston, which generates a load in a push rod. The push rod in turn applies a force to a pivotally mounted operating shaft causing it to rotate. By means of an eccentric action, an amplified force is applied to one or more adjustable tappet assemblies that advance a brake pad towards a brake rotor, causing a camping effect on the brake rotor, thereby retaining rotation of the rotor due to friction generated between the pad in contact with the tappet, and a further brake pad mounted on the opposite face of the rotor.

WO-A-98026968 discloses a brake assembly comprising a cast brake housing which incorporates a cast air chamber. The air chamber requires to be closed by a lid, which is of mild steel. The lid and the air chamber are attached to one another using suitable fastening means to form an air tight seal there between.

Some disadvantages are associated with the prior brake assemblies which have a separate air chamber screwed to the housing. The requirement for the front shell to be screwed to the flange of the brake housing requires additional machining, parts and labour, thereby increasing the cost of the finished brake assembly. The requirement for the weather tight seal between the brake housing and the front shell introduces further complexity into the assembly. The flange adds mass to the brake assembly and furthermore reduces the available space around the brake assembly thereby limiting the design freedom for other components near to the brake assembly.

The cast brake housing of WO-A-98026968 overcomes some of these problems but introduces the further problem of increasing the mass of the brake assembly. This is undesirable since the brake assembly is an unsprung mass and it is desirable to minimise unsprung masses so as to achieve optimum response of vehicle suspension. The wall of the cast air chamber could be reduced in thickness to reduce the mass of the brake assembly but this would not be desirable since castings do not perform well in tension, and the resistance to impact damage would be reduced. The requirement for the mild steel lid to close the cast air chamber requires a different joining method which may add further cost to the finished brake assembly.

EP0510930 shows a hydraulic brake caliper having a prefabricated cast-in-place cylinder bore liner. The liner is made from steel and the caliper body is made from aluminium. However, the problem being addressed here is to provide a light weight caliper which nevertheless has a cylinder bore liner with good machineable properties and wear properties. This is in contrast to one of the problems being addressed by the present invention which is to provide an alternative attachment method of an air chamber component to a brake housing.

According to the invention there is provided an air actuated brake assembly according to the independent claim.

A brake assembly so arranged eliminates the requirement to attach the air chamber to the brake housing after casting of the housing since a mechanical joint is made between the air chamber and the casting during manufacture. The consequent need to provide a flange to which the air chamber is attached with screw fixings is thereby eliminated. This provides a weight reduction of the undamped mass of the brake assembly when compared to the prior art brake assemblies. The elimination of the flange increases the available space around the brake assembly which is advantageous from a design point of view. The joint between the air chamber and the brake housing is inherently weather tight which further eliminates the requirement for providing a separate seal arrangement.

The air chamber shell may comprise a front shell and the assembly further includes a rear shell fixed to the front shell by fastening means, such as clamping or crimping, to form an air chamber. In the case of an air chamber of steel, the fastening arrangement of the front and rear shells can be entirely conventional, thus ensuring reliability and allowing the use of existing components, which may further contribute to reductions in cost and inventory.

In a preferred embodiment a form locking profile of the air chamber component comprises a flange of the air chamber component. The flange may be radially inwardly directed and may be continuous.

The form locking profile may be constituted by openings of said component. Alternatively the form locking profile may be discontinuous. Preferably the discontinuity is an outwardly directed bulge and may extend continuously around the circumference of the component or may be intermittent.

According to the invention there is provided a method of manufacturing a brake assembly according to the independent claim.

The air chamber may be pre-chilled prior to casting in the brake housing. This provides the advantage that there is less chance of the air chamber being softened as the casting is poured. Pre-chilling may also improve the dimensional tolerance of the finished brake actuator assembly.

The invention will now be described, by way of example only, with reference to the accompanying drawings in which:-
- Figure 1 is a diagrammatic cross-section of an air brake actuator assembly according to the present invention.
- Figure 2 is a diagrammatic representation of a front shell of an air chamber illustrated in Figure 1.
- Figure 3 is a diagrammatic cross-section of a casting detail of the brake assembly of Figure 1.
- Figure 4 is a diagrammatic cross-section of a casting detail of the brake assembly of Figure 1 according to an alternative embodiment.
- Figure 5 is a diagrammatic cross-section of a casting detail of the brake assembly of Figure 1 according to yet a further embodiment.
- Figure 6 is a diagrammatic cross section of a further embodiment of an air brake actuator assembly according to the present invention.

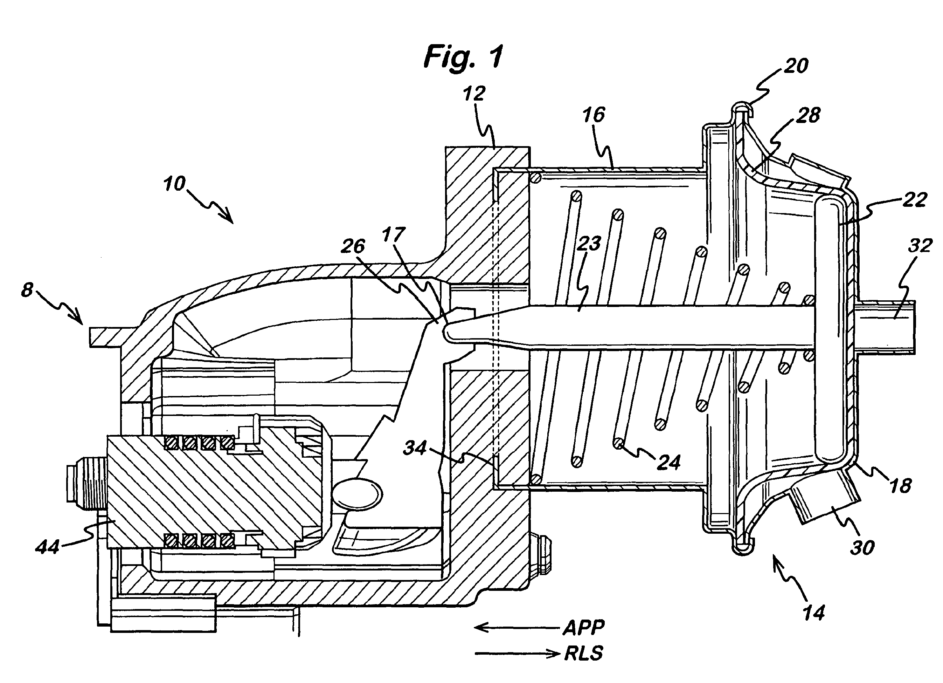

Referring firstly to Figure 1 there is shown a diagrammatic cross section of an air brake actuator assembly in accordance with the present invention, generally designated 10. The air brake actuator assembly 10 comprises a cast iron brake housing 12 and a substantially cylindrical steel air chamber 14. The air chamber 14 comprises a front shell 16 and a rear shell 18 both of which are made as pressings from steel. The front shell 16 and the rear shell 18 are joined together at a crimping point 20. Rear shell 18 is also herein referred to as a closing component since it substantially closes the open end of front shell 16. The air chamber 14 houses a piston 22 which is resiliently biased towards the rear shell 18 by a spring 24. The piston 22 has an arm 23 (or push rod) which passes through an opening in the brake housing 12 to connect with a pivot arm 26 (or operating shaft) which operates a brake rotor (not shown). The details of the brake operating mechanism are well known to the skilled person but in summary brake 8 is of the type comprising a caliper housing that straddles a disc or rotor (not shown). The caliper is typically mounted on an axle of the vehicle to be braked (not shown) and is slideable longitudinally relative to the axle. The rotor is mounted for rotation together with a wheel of the vehicle. The brake 8 is actuated by the introduction of pressurised air behind a diaphragm 28 of air chamber 14. The diaphragm is connected to a push rod 23 that co-operates with a socket 17 at the radially outer end of an operating shaft or "op-shaft" 26 of the brake. The operating shaft is generally "T" shaped. The lower end (when viewing figure 1) of the op-shaft 14 has at its opposite ends arcuate bearing surfaces seated in bearing seats arranged at the lower end of brake housing 12 of the caliper to permit the op-shaft 26 to rotate about an axis. The lower end of the op-shaft 14 is further provided with pockets (not shown) positioned eccentric to the op-shaft axis of rotation which, upon rotation, cause a force to be transmitted to a pair of spaced adjustable tappet assemblies 44. These tappet assemblies apply the input load from the actuator to the rear face of an inner brake pad (not shown), thus pressing the friction material of the brake pad into frictional engagement with the rotor.

A reaction force is generated through this frictional engagement between the rotor and the inner brake pad, that is fed back through the tappets assemblies 44 and op-shaft 26, that is supported by the brake housing 12. The brake housing 12 is secured to an outer housing part (not shown). Thus, the applied force being generated by movement of the op-shaft 26 is ultimately transmitted by reaction means to the outer housing part, which in turn presses an outer brake pad (not shown) into frictional engagement with the rotor. Therefore, the rotor, upon movement of the op-shaft 26 in an application direction APP (see figure 1), is clamped between the inner and outer brake pads to generate a braking force for service braking the vehicle under control of the applied input movement from push rod 23. Release of air pressure from the air chamber will cause the push rod to move in a release direction RLS (see figure 1) under the action of a return spring 24.

The tappet assemblies are adjustable to compensate for wear of the friction material of the brake pads.

For a further explanation of the service operation of brake 8, the reader is referred to US6435319, which shows a similar brake, and the service operation thereof.

Diaphragm 28 separates the front shell 16 and the rear shell 18. The diaphragm 28 is secured to the air chamber 14 at the crimping point 20. The piston 22 and spring 24 are located on one side of the diaphragm 28. The front shell 18 is provided with air inlets 30, 32 which are in fluid communication with the other side of the diaphragm 28. The front shell 16 is secured to the brake housing 12 by a radially inwardly directed flange 34 of the front shell 16 which is moulded into the cast brake housing 12 during casting thereof.

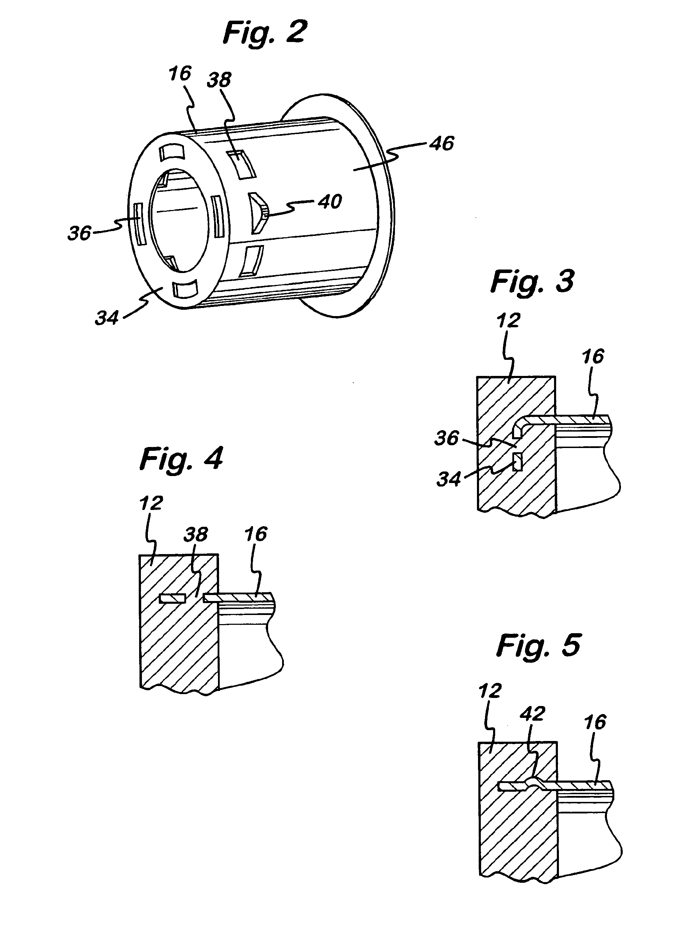

Referring now to Figure 2 there is shown a diagrammatic representation of the front shell 16 of the air chamber 14 illustrated in Figure 1. The front shell 16 includes a generally cylindrical body portion 46. In Figure 2 the flange 34 is shown with additional openings 36 which permit the molten cast iron of the brake housing 12 to flow there through during casting of the brake housing 12. The openings 36 provide additional strength and retention of the front shell 16 in the casting 12. Also shown in Figure 2 is an optional rib 40 on the outer surface of the front shell 16 which provides further retention of the front shell 16 in the casting 12.

Figures 3 - 5 illustrate diagrammatic cross-sections of a casting detail of the brake assembly of Figure 1 according to alternative embodiments. Figure 3 shows the flange 34 with an opening 36. Figure 4 shows an opening 38 in a side wall of the front shell 16. Figure 5 shows an alternative arrangement whereby a rib 42 is provided around a portion of or the full circumference of the front shell 16. Such a flange 34, rib 42 and openings 36 provide form locking profiles which provide mechanical attachment of the front shell 16 with the housing 12.

The front shell 16 can be fully formed prior to casting, thus avoiding any subsequent machining or forming operations. The brake housing 12 may be machined to the finished form is a conventional manner.

During manufacture of the brake actuator assembly 10 the brake housing 12 is cast around the front shell 16. The front shell can be cooled prior to the casting process to help in maintaining the dimensional tolerance and integrity of the front shell 16. The benefits of producing a brake actuator assembly 10 in this manner are the reduced weight of the assembly 10 and the improved strength and sealing of the front shell 16 with the brake housing 12. Furthermore an overall consequent reduction on the labour, assembly and manufacturing cost are also associated with the brake actuator assembly 10 of the present invention.

It will be appreciated that similar or dissimilar materials for the air chamber 14 and the housing 12 can be joined by the casting method described herein which may provide further advantages in enabling a greater choice of materials to be utilised. For example use of different materials for the casting such as aluminium or different grades of iron is possible. Alternatively cast steel can be used.

Various attachment methods can be used to secure the front shell 16 to the rear shell 18. A part of the front shell 16 can be locally crimped at circumferentially discreet locations onto the rear shell. Alternatively, a rim of front shell 16 can be rolled around a rim of rear shell 18, i.e. the rolling of the rim is carried out through 360 degrees of the rim to secure the two shelves through a complete 360 degree circumference. In a similar manner, a part of the rear shell can be locally crimped at circumferentially discreet locations onto the front shell or alternatively a rim of the rear shell can be rolled around a rim of the front shell. Discreet clamping bands can be used to clamp a rim of the front shell to a rim of the rear shell. Rims of the front and rear shells can be welded together, either at circumferentially discreet locations, or preferably through a full 360 degree circumference.

In summary, the present invention provides for all the known methods of attaching a pressed front shell onto a rear shell but which does not require specific attachment features of the front shell to secure it to the brake housing.

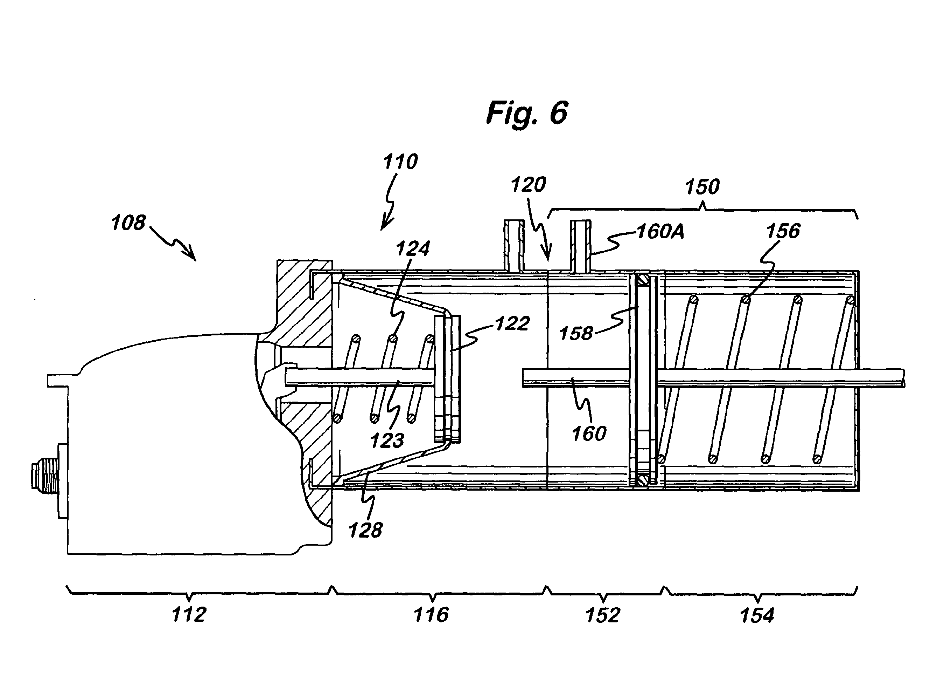

With reference to figure 6 there is shown a further brake assembly 108 having a brake actuator assembly 110 according to the present invention. In this case the brake assembly 108 can be used in a service mode, but also has a parking brake facility. In this case brake housing 112, front shell 116, diaphragm 128, spring load 124 and push rod 123 operate in a manner similar to their counterparts in brake assembly 8. Front shell 116 is preformed (e.g. by pressing sheet steel) with a portion of the cast brake housing 112 being cast around a portion of the front shell 116.

In this case, the brake 108 includes a park brake portion 150 which has a centre piece 152 and a pressed steel rear shell 154. Centre piece 152 is cast from aluminium and acts to close off the rear of front shell 116 in a manner similar to the way in which rear shell 18 closes off the rear of front shell 16. Centre piece 152 is therefore a closing component. Rear shell 154 includes a park brake spring 156 which acts on a diaphragm 158. Diaphragm 158 includes a push rod 160 which acts on piston 122 when the park brake is applied in a known manner. To release the park brake pressurised air is fed via port 160 into a region to the left of diaphragm 158, thereby forcing diaphragm 158 to the right when viewing figure 6 causing spring 156 to compress and hence causing push rod 160 to disengage piston 122, thereby releasing the parking brake.

Because the centre piece 152 is cast from aluminium, it is difficult to provide a deformable rim on this aluminium component. Furthermore, where the front shell 116 is made from pressed steel, it is not possible to weld the front shell to the aluminium centre piece. Thus, it will be appreciated that the connection techniques available to connect the front shell 116 to the centre piece 152 are more limited. However, it will also be appreciated that it is still possible to crimp a portion of the front shell onto the aluminium centre piece. Furthermore it is also possible to roll a rim of the front shell onto the aluminium centre piece. Clearly such metal deforming techniques of the front shell must be carried out after the brake housing 112 has been cast with the front shell.

## Claims

1. An air brake actuator assembly (10) including a cast brake housing (12), wherein the assembly further includes a preformed air chamber shell (16) **characterised in that** a portion of the cast brake housing is cast around a portion of the preformed air chamber shell (16), and wherein the air chamber shell has a substantially cylindrical body with one end of the body forming said portion of the air chamber shell, and in which said portion of the air chamber shell has a form locking profile engaged within the cast brake housing during casting thereof.

2. An assembly according to claim 1, wherein the form locking profile comprises a flange (34) of the air chamber shell, preferably a radially inwardly directed flange and/or preferably a continuous flange.

3. An assembly according to any one of claims 1 or 2, wherein said form locking profile is constituted by openings (38) of said shell.

4. An assembly according to any one of claims 1 to 3, wherein said form locking profile is discontinuous.

5. An assembly according to claim 4, wherein the discontinuity is an outwardly directed bulge.

6. An assembly according to claim 5, wherein the outward bulge is circumferentially continuous.

7. An assembly according to any preceding claim, wherein the air chamber component comprises a front shell and the assembly further includes a closing component (18) fixed to the front shell by fastening means to form an air chamber.

8. An assembly according to claim 7 in which the fastening means comprise deformed portions of the front shell.

9. An assembly according to claim 7 or 8 in which the front shell is a pressed steel front shell.

10. An assembly according to any one of claims 1 to 6 wherein the air chamber component comprises a front shell and the assembly further includes a park brake having a centre piece (152) acting to close the front shell in which the centre piece is fixed to the front shell by fastening means to form an air chamber, said fastening means comprising deformed portions of the front shell.

11. A method of manufacturing a brake assembly comprising the steps of:
providing a mould for casting a brake housing (12);
**characterised in that** the method further includes the steps of:
providing a preformed air chamber shell (16);
locating a portion of the air chamber component in the mould;
filling the mould with molten material,
then allowing the molten material to solidify in the mould, thereby forming a brake assembly (10) having the air chamber shell joined to the brake housing.

12. A method according to claim 11, and further comprising the step of pre-chilling the air chamber shell (16) immediately prior to filling the mould with molten material.

13. A method according to claim 11 or 12 further comprising the step of providing a closing component (18) and securing the air chamber shell to the closing component by deforming a region of the air chamber component.

## Patentansprüche

1. Druckluftbremsbetätigungsanordnung (10), die ein gegossenes Bremsgehäuse (12) enthält, wobei die Anordnung weiterhin eine vorgeformte Luftkammerschale (16) enthält, **dadurch gekennzeichnet, dass** ein Teil des gegossenen Gehäuses um einen Teil der vorgeformten Luftkammerschale (16) herum gegossen ist, und wobei die Luftkammerschale einen im Wesentlichen zylindrischen Körper aufweist, wobei ein Ende des Körpers den Teil der Luftkammerschale bildet und wobei der Teil der Luftkammerschale ein formschlüssiges Profil aufweist, das in dem gegossenen Bremsgehäuse während seines Gießens in Eingriff gelangt.

2. Anordnung nach Anspruch 1, wobei das formschlüssige Profil einen Flansch (34) der Luftkammerschale, vorzugsweise einen radial nach innen gerichteten Flansch und/oder vorzugsweise einen durchgehenden Flansch, umfasst.

3. Anordnung nach Anspruch 1 oder 2, wobei das formschlüssige Profil aus Öffnungen (38) der Schale besteht.

4. Anordnung nach einem der Ansprüche 1 bis 3, wobei das formschlüssige Profil unterbrochen ist.

5. Anordnung nach Anspruch 4, wobei es sich bei der Unterbrechung um eine nach außen gerichtete Auswölbung handelt.

6. Anordnung nach Anspruch 5, wobei die nach außen verlaufende Auswölbung um den Umfang durchgehend ist.

7. Anordnung nach einem der vorhergehenden Ansprüche, wobei die Luftkammerkomponente eine vordere Schale umfasst und die Anordnung weiterhin eine Schließkomponente (18) enthält, die durch Befestigungsmittel unter Bildung einer Luftkammer an der vorderen Schale befestigt ist.

8. Anordnung nach Anspruch 7, bei der die Befestigungsmittel verformte Teile der vorderen Schale umfassen.

9. Anordnung nach Anspruch 7 oder 8, wobei die vordere Schale eine vordere Schale aus Pressstahl ist.

10. Anordnung nach einem der Ansprüche 1 bis 6, wobei die Luftkammerkomponente eine vordere Schale umfasst und die Anordnung weiterhin eine Feststellbremse mit einem mittleren Teil (152) enthält, das zum Schließen der vorderen Schale wirkt, in der das mittlere Teil durch Befestigungsmittel unter Bildung einer Luftkammer an der vorderen Schale befestigt ist, wobei die Befestigungsmittel verformte Teile der vorderen Schale umfassen.

11. Verfahren zur Herstellung einer Bremsanordnung, das den Schritt des:
Bereitstellens eines Formwerkzeugs zum Giessen eines Bremsgehäuses (12) umfasst;
**dadurch gekennzeichnet, dass** das Verfahren weiterhin die folgenden Schritte umfasst:
Bereitstellen einer vorgeformten Luftkammerschale (16),
Anordnen eines Teils der Luftkammerkomponente in dem Formwerkzeug,
Füllen des Formwerkzeugs mit geschmolzenem Material,
dann Gestatten, dass das geschmolzene Material in der Form erstarrt, wodurch eine Bremsanordnung (10) gebildet wird, deren Luftkammerschale mit dem Bremsgehäuse zusammengefügt ist.

12. Verfahren nach Anspruch 11, weiterhin mit dem Schritt des Vorkühlens der Luftkammerschale (16) unmittelbar vor dem Füllen des Formwerkzeugs mit geschmolzenem Material.

13. Verfahren nach Anspruch 11 oder 12, weiterhin mit dem Schritt des Bereitstellens einer Schließkomponente (18) und Befestigens der Luftkammerschale an der Schließkomponente durch Verformen eines Bereichs der Luftkammerkomponente.

## Revendications

1. Ensemble actionneur (10) de frein à air comprimé comprenant un carter moulé (12) de frein, l'ensemble comprenant en outre une coque (16) de chambre à air préformée, **caractérisé en ce qu'**une partie du carter moulé de frein est coulée autour d'une partie de la coque (16) de chambre à air préformée, la coque de chambre à air étant dotée d'un corps sensiblement cylindrique, une extrémité du corps formant ladite partie de la coque de chambre à air, et dans lequel ladite partie de la coque de chambre à air présente un profil de blocage de contour engagé à l'intérieur du carter moulé de frein pendant le moulage de celui-ci.

2. Ensemble selon la revendication 1, le profil de blocage de contour comportant un flasque (34) de la coque de chambre à air, de préférence un flasque dirigé radialement vers l'intérieur et/ou de préférence un flasque continu.

3. Ensemble selon l'une quelconque des revendications 1 et 2, ledit profil de blocage de contour étant constitué d'ouvertures (38) de ladite coque.

4. Ensemble selon l'une quelconque des revendications 1 à 3, ledit profil de blocage de contour étant discontinu.

5. Ensemble selon la revendication 4, la discontinuité étant un renflement dirigé vers l'extérieur.

6. Ensemble selon la revendication 5, le renflement extérieur étant circonférentiellement continu.

7. Ensemble selon l'une quelconque des revendications précédentes, le composant de chambre à air comportant une coque avant et l'ensemble comprenant en outre un composant (18) de fermeture fixé à la coque avant par des moyens de fixation pour former une chambre à air.

8. Ensemble selon la revendication 7, dans lequel les moyens de fixation comportent des parties déformées de la coque avant.

9. Ensemble selon la revendication 7 ou 8, dans lequel la coque avant est une coque avant en acier embouti.

10. Ensemble selon l'une quelconque des revendications 1 à 6, le composant de chambre à air comportant une coque avant et l'ensemble comprenant en outre un frein de stationnement doté d'une pièce centrale (152) agissant de façon à fermer la coque avant, dans lequel la pièce centrale est fixée à la coque avant par des moyens de fixation pour former une chambre à air, lesdits moyens de fixation comportant des parties déformées de la coque avant.

11. Procédé de fabrication d'un ensemble de frein, comportant les étapes consistant à :
mettre en place un moule pour la coulée d'un carter (12) de frein ;
**caractérisé en ce que** le procédé comporte en outre les étapes consistant à :
mettre en place une coque (16) de chambre à air préformée ;
positionner une partie du composant de chambre à air dans le moule ;
remplir le moule de matériau en fusion ;
puis permettre au matériau en fusion de se solidifier dans le moule, formant ainsi un ensemble (10) de frein doté de la coque de chambre à air jointe au carter de frein.

12. Procédé selon la revendication 11, comportant en outre l'étape consistant à pré-refroidir la coque (16) de chambre à air immédiatement avant de remplir le moule de matériau en fusion.

13. Procédé selon la revendication 11 ou 12, comportant en outre l'étape consistant à mettre en place un composant (18) de fermeture et à fixer la coque de chambre à air au composant de fermeture en déformant une région du composant de chambre à air.
